# EUROPÄISCHE PATENTSCHRIFT

(11) **EP 4 124 269 B1**
(45) Veröffentlichungstag und Bekanntmachung des Hinweises auf die Patenterteilung: **04.06.2025**
(21) Anmeldenummer: 22185804.6
(22) Anmeldetag: 19.07.2022
(51) Int. Cl.: A47J 31/54, A47J 31/60

(54) **VERFAHREN UND VORRICHTUNG ZUM ENTKALKEN EINES HEISSGETRÄNKEGERÄTS**
METHOD AND DEVICE FOR REMOVING LIMESCALE FROM A HOT DRINK MAKER
PROCÉDÉ ET DISPOSITIF PERMETTANT DE DÉTARTRER UN APPAREIL À BOISSONS CHAUDES

(30) Priorität: 29.07.2021 DE 102021208225
(43) Veröffentlichungstag der Anmeldung: 01.02.2023
(73) Patentinhaber: BSH Hausgeräte GmbH, 81739 München (DE)
(72) Erfinder: Frank, Theresa, 83236 Übersee (DE); Marchner, Maximilian, 83342 Tacherting (DE); Nerbl, Christian, 83512 Wasserburg am Inn (DE); Speckbacher, Benedikt, 83339 Chieming (DE)

(56) Entgegenhaltungen:
- WO-A1-2014/170208
- WO-A1-2021/094931
- DE-A1- 102008 005 151
- DE-A1- 102010 002 438
- US-A1- 2017 273 502

## Beschreibung

Die vorliegende Erfindung betrifft ein Verfahren und eine Vorrichtung zum Entkalken eines Heißgetränkegeräts. Das Heißgetränkegerät umfasst einen elektrischen Durchlauferhitzer, einen Temperatursensor, einen Signalgeber und eine Steuerungs- oder Regelungsanordnung.

Heißgetränkegeräte mit einem Temperatursensor sind z.B. aus der WO 2014/170208 A1 und der US 2017/273502 A1 bekannt.

Die DE 10 2010 002 438 A1 betrifft ein Heißgetränkegerät zur Erkennung einer Verkalkung mit zwei Temperatursensoren.

Die Aufgabe der vorliegenden Erfindung ist es dagegen, bekannte Entkalkungsverfahren zu optimieren und die Wirksamkeit eines Entkalkungsverfahrens zu bestimmen.

Die Aufgabe wird bei dem eingangs genannten Verfahren, das von einem Heißgetränkegerät mit einem Temperatursensor am Auslauf des Durchlauferhitzers, dem Ausgangssensor, ausgeht, erfindungsgemäß dadurch gelöst, dass in einem ersten Schritt a) ein Entkalkungsverfahren gestartet wird, in einem zweiten Schritt b) ein zyklischer Durchfluss von Entkalkungsmittel erzeugt und eine Heizleistung zyklisch eingebracht werden, anschließend während jedes Zyklus in einem Schritt c) mindestens ein Wert an dem Ausgangssensor bestimmt wird, der bestimmte Wert oder ein aus mehreren Werten des Ausgangssensors bestimmter Vergleichswert oder eine Regelgröße der Regelungsanordnung in einem Schritt d) mit einem geräteseitig hinterlegten Grenzwert verglichen wird und in einem letzten Schritt e) die Zyklen solange wiederholt werden, bis der Grenzwert zumindest erreicht wird, woraufhin ein ersten Signal ausgegeben wird, dass das Entkalkungs-verfahren erfolgreich abgeschlossen ist.

Das Verfahren geht also von zumindest fünf Schritten aus. In einem ersten Schritt a) wird das Entkalkungsverfahren benutzerseitig oder automatisch gestartet. Für das Entkalkungsverfahren wird ein Entkalkungsmittel in das Heißgetränkegerät gegeben. Das Entkalkungsmittel kann sowohl eine Lösung aus Wasser und einem festem Entkalker, beispielsweise einem Entkalkerpulver oder Entkalkertabletten sein, als auch eine fertige Entkalkungslösung, die in das Heißgetränkegerät gegeben oder dort bevorratet werden kann oder im Heißgetränkegerät zubereitet wird. Eine maschinenseitige Zubereitung von Entkalkungsmittel erfolgt häufig in Heißgetränkegeräten, die sich in Küchenmöbel einbauen lassen. Dort können das fertige Entkalkungsmittel oder dessen Zutaten in einer für mehrere Entkalkungsvorgänge ausreichenden Menge bevorratet werden. Bei portablen Heißgetränkegeräte bzw. sogenannten Stand-Alone-Geräten dagegen wird das Entkalkungsmittel regelmäßig erst bei Bedarf unmittelbar vor dem Durchführen des Entkalkungsverfahrens zugegeben. Das erfindungsgemäße Entkalkungsverfahren kann bei beiden Typen von Heißgetränkegeräten angewandt werden.

Während des Entkalkungsverfahrens wird in einem Schritt b) ein zyklischer Durchfluss von Entkalkungsmittel erzeugt. Er erfolgt mit den für einen Durchlauferhitzerbetrieb typischen Pulsspitzen, die sich zyklisch wiederholen. Zwischen den Pulsspitzen ist der Fluidfluss nicht Null, sondern lediglich deutlich geringer, sodass weiterhin Entkalkungsmittel durch den Durchlauferhitzer fließt.

Das Entkalkungsmittel wirkt stärker und trägt die Kalkschicht schneller ab, wenn es erwärmt wird. Deswegen wird im Schritt b) das Entkalkungsmittel im Durchlauferhitzer durch ein zyklisches Einbringen von Heizleistung erwärmt. Bei der Heizleistung handelt es sich um eine in einem definierten Zeitintervall eingebrachte Heizenergie. Ihre Leistungsspitzen bleiben von Zyklus zu Zyklus in der Regel gleich. Im Laufe des Verfahrens kann die Dauer der eingebrachten Heizleistung konstant bleiben oder variiert werden.

Nach jeder Pulsspitze des Fluidflusses wird der Durchlauferhitzer angeschaltet und die Heizenergie in das Entkalkungsmittel pulsartig eingebracht. Nach einer vorbestimmten Zeitdauer wird der Durchlauferhitzer wieder abgeschaltet. Die am Ausgangssensor erfassbare Temperatur des Entkalkungsmittels steigt wegen der Massenträgheit des Durchlauferhitzers zunächst noch an, kühlt aber danach wieder ab, weil ein stetiger Fluidfluss im Durchlauferhitzer besteht. Der Temperarturverlauf des Entkalkungsmittels hat so über das gesamte Entkalkungsverfahren hinweg gesehen einen weitgehend sinusartigen Verlauf. Als ein Zyklus kann beispielsweise ein Zeitintervall vom Einbringen von Entkalkungsmittel mit einer Pulsspitze bis zur nächsten Pulsspitze betrachtet werden.

In einem nächsten Schritt c) wird während jedes Zyklus ein Temperaturwert am Ausgangssensors bestimmt. Er steigt durch die Abnahme der Kalkschicht im Laufe des Entkalkungsverfahren an, da das Entkalkungsmittel mehr Wärmeenergie aufnimmt.

Anschließend wird in einem Schritt d) der erfasste Temperaturwert mit einem geräteseitig hinterlegten Grenzwert verglichen. Der Grenzwert steht für einen ausreichenden Abbau der Kalkschicht im Durchlauferhitzer und beruht auf Erfahrungswerten. Wird der Grenzwert erreicht oder überschritten, kann das Entkalkungsverfahren beendet oder als erfolgreich betrachtet werden.

Alternativ können im Schritt c) mehrere Werte des Ausgangssensors erfasst und im Schritt d) ein Vergleichswert bestimmt werden. Anschließend kann der Vergleichswert mit dem hinterlegten Grenzwert verglichen werden. Aus den zwei erfassten Werten kann eine Differenz oder ein Mittelwert gebildet und mit dem hinterlegten Grenzwert verglichen werden. Sowohl Mittelwerte als auch die erfassten Werte mehrere Zyklen können miteinander ins Verhältnis gesetzt und mit einem hinterlegten Grenzwert verglichen werden. Dazu kann der hinterlegte Grenzwert als Verlustfaktor definiert werden.

In einer weiteren Alternative kann eine Regelgröße der Regelungsanordnung mit einem geräteseitig hinterlegten Grenzwert verglichen werden. Sie kann von der Regelungsanordnung in Abhängigkeit des am Ausgangssensor erfassten Temperaturwertes geregelt werden. Als Regelgröße kann zum Beispiel die Dauer der eingebrachte Heizleistung oder die Dauer des Fluidflusses dienen. Im ersten Fall kann Heizleistung eingespart, im zweiten Fall können die Zyklen verkürzt und so das Entkalkungsverfahren beschleunigt werden.

Die Schritte b) bis d) werden in einem Schritt e) solange wiederholt, bis der hinterlegte Grenzwert erreicht oder über- oder unterschritten ist. Daraufhin schließt die Steuerungs- oder Regelungsanordnung das Entkalkungsverfahren im Schritt e) ab bzw. beendet es und gibt ein erstes Signal aus, dass das Entkalkungsverfahren erfolgreich abgeschlossen ist.

Während des Entkalkungsverfahrens wird kaltes Entkalkungsmittel impulsartig und in sich wiederholenden Zyklen in einen Durchlauferhitzer des Heißgetränkegeräts befördert und erwärmt. Zu Beginn jedes Zyklus wird das Entkalkungsmittel mit Pulsspitzen in den Durchlauferhitzer gepumpt. Nach einer Pulsspitze eines Zyklus fließt weiterhin Entkalkungsmittel in den Durchlauferhitzer, allerdings mit einer deutlich geringeren Fließgeschwindigkeit. Das Entkalkungsmittel wird durch das impulsartige Einbringen der Heizleistung in den Durchlauferhitzer erwärmt. Dafür wird die Heizung angeschaltet und nach einem definierten Zeitintervall wieder ausgeschaltet. Während des Zyklus wird mindestens ein Wert am Ausgangssensor von der Steuerungs- oder Regelungsanordnung zur weiteren Auswertung erfasst. Aufgrund des Vergleichens und Auswertens des/der erfassten Werte/s mit dem geräteseitig hinterlegten Grenzwert kann die Steuerungs- oder Regelungsanordnung direkt den Fortschritt des Entkalkungsverfahren bestimmen. Der Nutzer bekommt durch die direkte Ermittlung des Fortschritts des Entkalkungsverfahren eine schnelle Rückmeldung, ob das Entkalkungsverfahren ausreichend war.

In einer vorteilhaften Ausführung kann der geräteseitig hinterlegte Grenzwert einem absoluten Temperaturwert entsprechen. Während des Entkalkungsverfahrens wird im Schritt c) innerhalb jedes Zyklus ein Temperaturwert am Ausgangssensors bestimmt. Der Wert kann vorteilhaft mit dem dimensionsgleichen Grenzwert verglichen werden. Er entspricht derjenigen Temperatur, die das Entkalkungsmittel am Ende des Entkalkungsverfahrens erreicht, wenn es die Heizenergie unbehindert von einer Kalkschicht aufnehmen kann. Denn zu Beginn des Entkalkungsverfahren nimmt Entkalkungsmittel die Heizenergie aus dem Durchlauferhitzer schlechter auf, da die Kalkschicht isolierend wirkt. Mit Abnahme der Kalkschicht nimmt das Entkalkungsmittel die Wärmeenergie besser auf und die Temperatur des Entkalkungsmittels am Ausganssensor steigt bei unveränderter Dauer der eingebrachten Heizleistung an. Dabei handelt es sich um eine einfache Ausführungsform, da absolute Werte des zweiten Temperatursensors mit einem absoluten Grenzwert verglichen werden und keine Regelung notwendig ist.

Alternativ kann die Steuerungsanordnung die Dauer der eingebrachten Heizleistung während des Entkalkungsverfahrens verringern. Die Verringerung kann sich an dem Wert orientieren, der am Ausgangssensor gemessen wird. Erreicht der erfasste Wert am Ausgangssensor einen Richtwert, beispielsweise 60°C, wird der Durchlauferhitzer abgeschaltet. Die Temperatur am Ausgangssensor steigt zwar aufgrund der Massenträgheit des Durchlauferhitzers zunächst noch an, sinkt aber infolge seines Abschaltens bald. Nach einer vorgegebenen Zeit schaltet die Regelungsanordnung den Durchlauferhitzer wieder ein und das Entkalkungsmittel wird wieder erwärmt. Die Kalkschicht nimmt einen Teil der Energie des Durchlauferhitzers auf und gibt diese zeitverzögert an das Entkalkungsmittel weiter, während der Durchlauferhitzer ausgeschaltet ist. Die Kalkschicht kühlt langsam wieder ab und kann keine Energie mehr an das Entkalkungsmittel abgegeben. Die Temperatur des Entkalkungsmittels hat so einen Verlauf einer gedämpften Schwingung. Das bedeutet, dass die Temperaturmaxima der Werte, die vom Ausgangssensor erfasst wurden, mit der Abnahme der Kalkschicht sinken, weil die Heizenergie schneller vom Entkalkungsmittel aufgenommen wird und die Temperaturminima steigen, weil mit Abnahme der Kalkschicht dieser immer weniger abkühlt. Bei der Regelung der Heizleitung nach ihrem tatsächlichen Erwärmungserfolg am Ausgangssensor lässt sich Heizenergie einsparen.

In einer weiteren vorteilhaften Ausführungsform kann der geräteseitig hinterlegte Grenzwert einem Zeitwert entsprechen. Der Durchlauferhitzer wird bei Erreichen des obigen Richtwerts von z.B. 60°C am Ausgangssensor aus- bzw. angeschaltet. Im Laufe des Entkalkungsverfahren kann die Dauer der eingebrachten Heizleistung mit Abnahme der Kalkschicht verringert werden. Die Steuerungsanordnung erfasst dann die Zeitdauer der eingebrachten Heizleistung und vergleicht anschließend den erfassten Wert mit dem hinterlegten Zeitwert als Grenzwert. Erreicht die Dauer der eingebrachten Heizleistung den hinterlegten Zeitwert oder unterschreitet sie ihn, kann das Entkalkungsverfahren als erfolgreich durchgeführt gelten.

In einer weiteren vorteilhaften Ausführungsform kann der hinterlegte Grenzwert einer Differenz zweier Temperaturwerte entsprechen. Die Differenz kann aus zwei erfassten Werten des Ausgangssensors gebildet werden. Dafür erfasst die Steuerungsanordnung innerhalb eines Zyklus mehrere Werte des Ausgangssensors und bildet einen Differenzwert. Umwelteinflüsse und Temperaturschwankungen spielen dadurch eine geringere Rolle.

Nach dem Ein- und Ausschalten des Durchlauferhitzers in Abhängigkeit des Richtwertes des Ausgangssensors sinken durch die Abnahme der Kalkschicht die Temperaturmaxima, die Temperaturminima dagegen steigen. Der sich daraus ergebende Verlauf der Werte des Ausgangssensors ist charakteristisch für eine gedämpfte Schwingung. In einer vorteilhaften Ausführung des obigen differenzgestützten Verfahrens kann die Steuerungsanordnung in einem Schritt i) nach dem Schritt c) einen zweiten Wert des Ausgangssensors innerhalb desselben Zyklus erfassen. Aus den beiden erfassten Werten des Ausgangssensors wird ein Differenzwert bestimmt, der wegen der Dämpfung der sinusartigen Schwingung mit der Zeit abnimmt. Dazu werden charakteristische zeitliche Abstände innerhalb eines Zyklus werkseitig bestimmt und in der Steuerungsanordnung hinterlegt. Der Differenzwert wird mit dem geräteseitig hinterlegten Grenzwert, der einem Differenzwert entspricht, verglichen. Wird der Grenzwert erreicht, gibt die Steuerungsanordnung über die Elektronik bzw. den Signalgeber das erste Signal aus, dass das Entkalkungsverfahren erfolgreich abgeschlossen ist.

In einer weiteren Ausführung des obigen differenzgestützten Verfahrens kann in der Steuerungsanordnung eine Logik hinterlegt sein, die die Maxima und Minima der Werte am Ausgangssensor innerhalb eines Zyklus bestimmt. Dafür werden die Temperaturwerte am Ausgangssensor kontinuierlich erfasst. Die Steuerungsanordnung ermittelt deren Maxima und Minima und bestimmt deren Differenz, also die maximale Amplitude jedes Zyklus. Sie nimmt während des Entkalkungsverfahrens ab. Sie vergleicht ihren Wert mit dem geräteseitig hinterlegten Grenzwert. Bei der Differenzbildung zwischen dem Maximum und dem Minimum der Werte des zweiten Temperatursensors werden definierte Bereiche innerhalb eines Zyklus betrachtet und Umwelteinflüsse werden vernachlässigt. In der Steuerungs-anordnung sind so keine Abstände für die Erfassung der beiden Werte für die Differenzbildung hinterlegt.

In einer weiteren vorteilhaften Ausführungsform stützt sich das erfindungsgemäße Verfahren auf ein Heißgetränkegerät mit einem zusätzlichen Temperatursensor: Auf einer äußeren, fluidfreien Oberfläche des Durchlauferhitzers bzw. seines Gehäuses befindet sich ein Eingangssensor, wie ihn auch die obige DE 10 2010 002 438 beschreibt. Die Temperaturwerte des Eingangssensors stehen für die in den Durchlauferhitzer eingebrachte Energie. In einem Schritt ii) nach dem Schritt c) kann nun ein Temperaturwert am Eingangssensors bestimmt werden. Die erfassten Werte der beiden Temperatursensoren können mit einander ins Verhältnis gesetzt und mit einem Grenzwert dafür verglichen werden. Das Verhältnis beschreibt einen Verlustfaktor der eingebrachten Heizenergie, da der Eingangssensor als Maß für die eingebrachte Energie und der Ausgangssensor als Maß für die im Entkalkungsmittel ankommende Heizenergie steht.

In einer weiteren Ausführungsform des differenzgestützten Verfahrens kann die Steuerungsanordnung in einem Schritt iii) nach dem Schritt c) einen Differenzwert der erfassten Werte der beiden Temperatursensoren, des Eingangs- und des Ausgangssensors, in einem Zyklus bestimmen. Danach kann sie ihn mit dem geräteseitig hinterlegten Grenzwert, der einer Differenz entspricht, vergleichen. Der Eingangssensor steht für die eingebrachte Heizenergie, der Ausgangssensor für die im Entkalkungsmittel ankommende Energie. Im Laufe des Entkalkungsverfahrens können die Werte der beiden Temperatursensoren konvergieren, ggf. sogar auf denselben Wert. In diesem Fall kann der geräteseitig hinterlegte Grenzwert gegen Null gehen oder zu Null werden, weil dann die in den Durchlauferhitzer eingebrachte Heizenergie nahezu oder vollständig vom Wasser aufgenommen wurde. Bei dieser Ausführungsform ermittelt das Heißgetränkegerät, wie viel von der eingebrachten Heizenergie im Entkalkungsmittel ankommt.

In einer weiteren Ausführungsform kann das Entkalkungsverfahren vor Erreichen des Grenzwertes bzw. wegen Nichterreichens des Grenzwerts abgebrochen werden. Daraufhin kann ein zweites Signal ausgegeben werden, dass das Entkalkungsverfahren nicht erfolgreich abgeschlossen werden konnte. Das zweite Signal unterscheidet sich vorteilhafterweise von dem ersten Signal aus dem Schritt e), weil es einen anderen Gerätezustand signalisiert. Der Abbruch des Verfahrens kann auf einer benutzerseitigen Störung beruhen, zum Beispiel, weil zu wenig Wasser oder Entkalkungsmittel in einen Wasserbehälter des Heißgetränkegeräts gegeben wurde oder weil der Nutzer eine Tropfschale aus dem Heißgetränkegerät nimmt, in die verbrauchte Flüssigkeit abgegeben wird. Der Abbruch des Verfahrens vor Erreichen des Grenzwertes bzw. wegen Nichterreichens des Grenzwerts kann aber auch darin begründet sein, dass das Entkalkungsmittel zu gering dosiert wurde, etwa weil ein Wasserhärtegrad des Zubereitungswassers nicht korrekt eingestellt wurde. Die Menge an Entkalkungsmittel reicht dann für ein erfolgreiches Entkalken des Zubereitungsgeräts nicht aus und muss nachgefüllt werden.

Das zweite Signal selbst oder eine weitere Signalisierung kann beispielsweise auf einem Display den geräteseitigen Bedarf darstellen, der zum Abbruch des Entkalkungsverfahrens geführt hat. Der Nutzer wird so darüber informiert, was er ändern muss, damit das Entkalkungs-verfahren fortgesetzt und erfolgreich abgeschlossen werden kann.

Die oben genannte Aufgabe richtet sich auch an die eingangs genannte Vorrichtung, nämlich an ein Heißgetränkegerät mit einem Durchlauferhitzer, einer Anzahl an Temperatursensoren, einem Signalgeber und einer Steuerungs- oder Regelungsanordnung. Die oben genannte Aufgabe wird erfindungsgemäß nun durch genau ein Temperatursensor gelöst, der sich an dem Auslauf des Durchlauferhitzers befindet. Denn die oben beschriebenen Verfahren der Ansprüche 1 bis 6 kommen überraschenderweise mit nur einem Temperatursensor aus, der sich am Auslauf des Durchlauferhitzers befindet. Durch den Entfall eines weiteren Temperatursensors können Heißgetränkegeräte kostengünstiger hergestellt werden.

Das Prinzip der Erfindung wird im Folgenden anhand von Zeichnungen beispielshalber noch näher erläutert. In der Zeichnung zeigen:
Figur 1: einen Aufbau eines Durchlauferhitzers aus dem Stand der Technik,
Figur 2: ein erstes Konzept des Verfahrens mit einem Ausgangssensor und
Figur 3: ein zweites Konzept des Verfahrens.

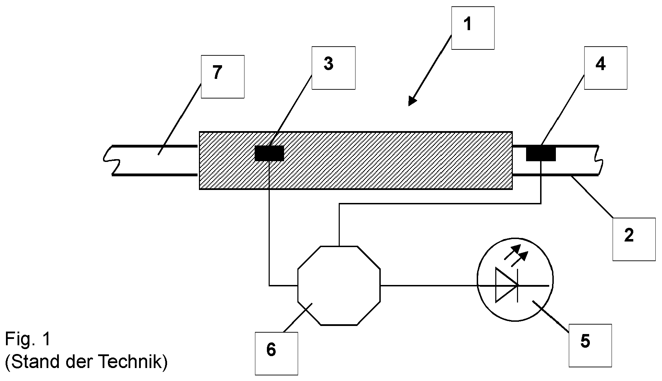

Figur 1 zeigt schematisch einen Durchlauferhitzer 1 eines Heißgetränkezubereitungsgeräts mit einem Zulauf 7 für Frischwasser und einem Auslauf 2 für das erhitzte Wasser. Auf einer Oberfläche des Durchlauferhitzers 1 ist ein Eingangssensor 3, im Folgenden auch erster Temperatursensor, zur Bestimmung seiner Oberflächentemperatur angebracht. Die dort bestimmte Oberflächentemperatur dient als Maß für die eingebrachte Heizleistung. Bei der eingebrachten Heizleistung handelt es sich um die in einem definierten Zeitintervall eingebrachte Heizenergie. Ein Ausgangssensor 4, im Folgenden auch zweiter Temperatursensor, ist im Auslauf 2 stromab des Durchlauferhitzers 1 angebracht. Er erfasst die Temperatur des erhitzten Entkalkungsmittels. Beide Temperatursensoren 3, 4 und eine Elektronik bzw. Signalgeber 5 sind mit einer Steuerungsanordnung 6 elektrisch verbunden. Die eingebrachte Heizleistung wird von der Steuerungsanordnung 6 geregelt. Diese Anordnung wird gemäß DE 10 2010 002 438 A1 zum Erkennen einer Verkalkung insbesondere des Durchlauferhitzers 1 eingesetzt.

Erfindungsgemäß lässt sie sich aber auch zur Beurteilung des Erfolgs eines Entkalkungsvor-gangs nutzen: Das Ziel eines Entkalkungsverfahrens ist es, eine Kalkschicht in dem Durchlauferhitzer 1 abzubauen. Während eines Entkalkungsverfahrens wird kaltes, mit Entkalkungs-mittel versetztes Wasser impulsartig bzw. in sich wiederholenden Zyklen in den Durchlauferhitzer 1 gepumpt. In den sich wiederholenden Zyklen wird ein Fluidfluss mit Pulsspitzen und eine Heizleistung impulsartig in den Durchlauferhitzer eingebracht. Zwischen den Pulsspitzen des Fluidflusses wird er nicht Null, sondern ist deutlich geringer. Der Durchlauferhitzer 1 erwärmt das kalte Entkalkungsmittel, das zu Beginn eines ersten Zyklus' in ihn hineingepumpt wurde. Der nächste Zyklus startet mit der nächsten Pulsspitze des Entkalkungsmittels. Währenddessen steigt die Temperatur am ersten Temperatursensor 3. Nach einem vorbestimmten Zeitintervall, in dem das Entkalkungs-mittel im Durchlauferhitzer 1 vollständig erhitzt wurde, wird die Zufuhr der Heizleistung gestoppt. Dadurch sinkt die Temperatur am ersten Temperatursensor 3, zumal da das erhitze Entkalkungsmittel zu Beginn eines zweiten Zyklus durch Nachpumpen neuen kalten Entkalkungsmittels durch den Auslauf 2 ausgestoßen wird. Während eines Zyklus kommt es also zu einem Ansteigen und zu einem Absinken der Temperatur des ersten Temperatursensors 3, d.h. über mehrere Zyklen hinweg kommt es zu Schwingungen im Temperaturverhalten des ersten Temperatursensors 3.

Sobald das erwärmte Entkalkungsmittel des ersten Zyklus' von weiterem kaltem Entkalkungsmittel durch den Auslauf 2 hindurch verdrängt wird, steigt die Temperatur des zweiten Temperatursensors 4. Ist das erhitzte Entkalkungsmittel des ersten Zyklus' vollständig verdrängt und der Durchlauferhitzer 1 mit dem Entkalkungsmittel des zweiten Zyklus' gefüllt, sinkt die Temperatur am zweiten Temperatursensor 4. Auch beim zweiten Temperatursensor 4 kommt es also aufgrund des impulsartigen Einbringens der Heizleistung und des Fluidflusses zu einem Ansteigen und Absinken der Temperatur innerhalb eines Zyklus, allerdings zeitlich versetzt zum ersten Temperatursensor 3. Am zweiten Temperatursensor 4 lässt sich somit ebenfalls ein Schwingverhalten der erfassten Temperaturwerte beobachten.

Weil die Werte des ersten Temperatursensors 3 für die aufgewandte Heizenergie und die Werte des zweiten Temperatursensors 4 für den Effekt der aufgewandte Heizenergie stehen, lässt das Verhältnis der Werte des ersten Temperatursensors 3 und des zweiten Temperatur-sensors 4 erfindungsgemäß Rückschlüsse auf den Wirkungsgrad des Durchlauferhitzers 1 zu.

Über die Zeit betrachtet lässt sich erfindungsgemäß sogar aus den jeweiligen Absolutwerten des ersten Temperatursensors 3 und des zweiten Temperatursensors 4 allein ein Entkalkungsfortschritt ableiten: Das im warmen Wassers stärker wirkende Entkalkungs-mittel trägt die Kalkschicht im Durchlauferhitzer 1 im Laufe des Entkalkungsverfahrens ab. Da die Kalk-schicht wärmedämmend wirkt, einen Wärmeübergang von einem Heizelement des Durchlauferhitzers 1 in das Entkalkungsmittel also behindert, gelangt die eingebrachte Heizleistung mit der abnehmenden Kalkschicht schneller in das Entkalkungsmittel. Diese Entwicklung lässt sich durch Auswerten der Messwerte des ersten 3 und/oder des zweiten Temperatursensors 4 nachvollziehen.

In einem Speicher in der Steuerungsanordnung 6 ist ein Grenzwert hinterlegt, der für einen ausreichenden Grad der Entkalkung steht. Die Steuerungsanordnung 6 vergleicht die erfassten Messwerte mit dem Grenzwert nach einem der unten erläuterten Konzepte. Wird der Grenzwert erreicht, gibt die Steuerungsanordnung 6 durch die Elektronik 5 ein Signal aus. Das Entkalkungsverfahren ist dann abgeschlossen. Wird der Grenzwert nicht erreicht, kann die Anzahl der Zyklen oder die Dosierung des Entkalkungsmittels in demselben oder in einem späteren Entkalkungsvorgang solange erhöht werden, bis der Grenzwert erreicht ist.

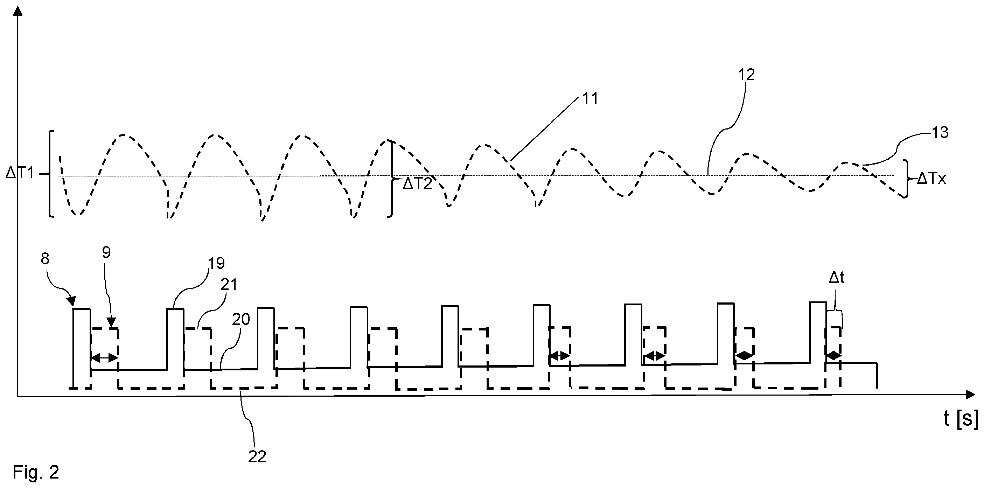

Figur 2 zeigt in einem kartesischen Koordinatensystem ein erstes Konzept zur Erkennung eines Entkalkungsvorgangs: Eine durchgezogene Linie zeigt einen Fluidfluss 8 und eine unterbrochene Line und zeitlich versetzt eine in einen Durchlauferhitzer gemäß Fig. 1 eingebrachte Heizleistung 9 in Abhängigkeit von einer Zeit t. Der Fluidfluss 8 wird zyklisch erzeugt, hat also Pulsspitzen 19, denen Spitzen 21 der Heizleistung 9 folgen. Zwischen den Pulsspitzen 19 ist der Fluidfluss 8 nicht null, sondern erheblich geringer als an den Pulsspitzen 19. Der Fluidfluss 8 und die eingebrachte Heizleistung 9 erfolgen in den sich wiederholenden Zyklen, die jeweils eine Pulsspitze 19 und eine Phase 20 geringen Fluidflusses 8 bzw. eine Phase 22 der ausgeschalteten Heizleistung 9 umfassen. Die Amplitude der Pulsspitzen 19 und die jeweilige Dauer des Fluidflusses 8 während eines Zyklus sind während des Entkalkungsverfahrens konstant. Die Amplitude 21 der eingebrachten Heizleistung 9 ist ebenfalls konstant. Die Regelungsanordnung verringert dagegen im Laufe des Entkalkungsverfahrens die Dauer Δt, während der die Heizenergie aufgebracht wird, die Spitzen 21 der Heizleistung 9 werden schmaler.

Figur 2 zeigt außerdem eine Messkurve 11 des zweiten Temperatursensors 4 während des Entkalkungsverfahrens. Er wird kontinuierlich betrieben. Die Kurve 11 entspricht einer sinus-artigen bzw. gedämpften Schwingung mit einer über die Zeit t abnehmenden Amplitude ΔT. Denn das Temperaturmaximum der Messkurve 11 sinkt wegen der kontinuierlich verkürzten Heizphase. Auch das Temperaturminimum steigt mit der Zeit t geringfügig, weil mit der abnehmenden Kalkschicht Heizenergie aufgrund ihrer Masseträgheit auch bei ausgeschalteter Heizung zunehmend besser in das Entkalkungsmittel gelangt.

Die Verkürzung der Zeitintervalle für das Einbringen der Heizleistung 9 orientiert sich an der aktuell am Temperatursensor 4 gemessenen Temperatur. Sobald sie einen Richtwert 12 von zum Beispiel 60° erreicht hat, wird die Heizleistung abgeschaltet. Die Massenträgheit der Heizung sorgt für eine weitere Erhitzung des Entkalkungsmittels bis zu einem Maximum in der Messkurve 11. Nach Ablauf einer vorgegebenen Zeitspanne schaltet die Steuerungsanordnung 6 den Durchlauferhitzer wieder ein, woraufhin die Messkurve 11 ein Minimum ausbildet. Die abnehmende Kalkschicht erlaubt einen zunehmend effektiveren Temperaturübergang, weshalb bei gleicher Heizleistung die Zeitdauer zwischen dem Einschalten und dem Erreichen des Richtwerts verkürzt werden kann.

Weil das Abnehmen der Kalkschicht auch zu einem Dämpfen der Schwingung der Messkurve führt, beispielsweise sowohl die Maxima der Messkurve 11 verringert, als auch die Minima ansteigen lässt, kann die abnehmende Differenz bzw. Amplitude ΔT den Fortschritt der Entkalkung anzeigen.

In der Steuerungsanordnung 6 ist ein Grenzwert für die Amplitude ΔT hinterlegt. Die Steuerungsanordnung 6 bestimmt die tatsächliche Amplitude ΔTx durch Differenzbildung zweier Werte des zweiten Temperatursensors 4 innerhalb eines Zyklus, beispielsweise aus der Differenz des Temperaturmaximums und des Temperaturminimums desselben Zyklus. Exemplarisch sind in Figur 2 Messungen der Amplitude ΔT1 zu Beginn des Entkalkungsverfahrens und ΔT2 in der Mitte des Entkalkungsverfahrens dargestellt. Den gemessenen Differenzwert vergleicht die Steuerungsanordnung 6 mit dem hinterlegten Grenzwert für ΔT. Entspricht die ermittelte Amplitude ΔTx dem hinterlegten Grenzwert für ΔT oder unterschreitet sie ihn, gibt die Steuerungsanordnung 6 über die Elektronik 5 ein Signal aus, dass das Entkalkungsverfahren abgeschlossen ist.

Alternativ zum hinterlegten Grenzwert für die Amplitude ΔT ist der hinterlegte Grenzwert ein Zeitwert Δt für die Dauer der eingebrachten Heizenergie je Zyklus. Die Steuerungsanordnung bestimmt die tatsächliche Zeitdauer der eingebrachten Heizleistung 9 anhand des Richtwerts 12. Wie oben beschrieben verringert sich die Dauer der eingebrachten Heizleistung 9 im Laufe des Entkalkungsverfahrens von Zyklus zu Zyklus durch die abnehmende Kalkschicht. Wurde die Dauer der eingebrachten Heizleistung so weit verringert, dass sie dem Zeitwert Δt entspricht, wurde die Kalkschicht ausreichend abgebaut und das Entkalkungsverfahren kann erfolgreich beendet werden. In Figur 2 ist Δt exemplarisch am Ende des Entkalkungsverfahrens eingezeichnet.

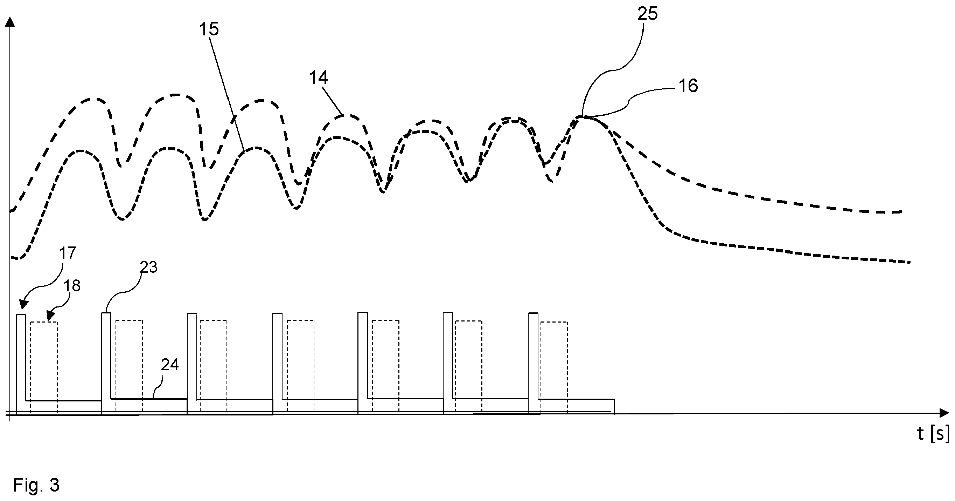

In Figur 3 erfolgt wie in Figur 2 der Fluidfluss 17 in gleichbleibenden Pulsspitzen. Im Gegensatz zu Figur 2 wird in Figur 3 die Dauer Δt der eingebrachten Heizenergie 9 nicht verkürzt. Die Werte der beiden Temperatursensoren 3, 4 werden kontinuierlich bestimmt. Es ergeben sich eine sinusartigen Kurve 14 für die Werte des Temperatursensors 3 und eine sinusartige Kurve 15 für die Werte des Temperatursensors 4. Durch das zyklische Ausschalten der Heizleistung 18 und des Fluidflusses 17 kommt es zu dem sinusartigen Verlauf der beiden Messkurven 14, 15. Während eines Zyklus gelangt Entkalkungsmittel mit Pulsspitzen 23 zu Beginn des Zyklus in den Durchlauferhitzer. Es kommt nach diesen Pulsspitzen 24 zu einem kontinuierlichen Fluidfluss 17. Die Pulsspitzen 24 sind deutlich höher als der kontinuierliche Fluidfluss. Das Entkalkungsmittel wird nach dem pulsspitzartigen Fluidflusses 24 durch das Einbringen einer Heizleistung 18 erwärmt. Nach einer in der Steuerungsanordnung hinterlegten Zeit t wird die Heizleistung 18 abgeschaltet. Aufgrund der Massenträgheit der Heizleistung steigen die Werte der beiden Temperatursensoren während eines Zyklus zunächst an und sinken mit einer zeitlichen Verzögerung wieder, wenn die Heizleistung abgeschaltet wird.

Die Messkurve 15 des zweiten Temperatursensors 4 steigt während der Entkalkung insgesamt an, weil die eingebrachte Heizleistung 18 über die Zeit t nicht reduziert wird und mit abnehmender Kalkschicht mehr Heizenergie pro Zyklus in das Entkalkungsmittel gelangt. Die Messkurve 14 des ersten Temperatursensors 3 dagegen weist eine leicht fallende Tendenz auf, da mit der Abnahme der Kalkschicht die Heizleistung 9 schneller im durchlaufenden Entkalkungsmittel ankommt und daher immer weniger vom Gehäuse des Durchlauferhitzers 1 abgestrahlt wird. Im Laufe der Zyklen konvergieren die Messkurven 14, 15 der beiden Temperatursensoren 3, 4 auf einen gemeinsamen Wert 16.

In der Steuerungsanordnung ist als Grenzwert 25 ein absoluter Temperaturwert des zweiten Temperatursensors 4 hinterlegt. Der Grenzwert 25 steht für einen ausreichenden Abbau der Kalkschicht im Durchlauferhitzer. Während des Entkalkungsverfahrens vergleicht die Steuerungsanordnung den gemessenen Wert des zweiten Temperatursensors 4 mit dem Grenzwert 25. Die Zyklen für das Entkalkungsverfahren werden solange durchgeführt bis der Grenzwert 25 erreicht ist. Bei Erreichen des Grenzwertes 25 gibt die Steuerungsanordnung 6 über die Elektronik 5 ein Signal aus, dass das Entkalkungsverfahren abgeschlossen ist.

### Bezugszeichenliste

- 1: Durchlauferhitzer
- 2: Auslauf
- 3: Eingangssensor/erster Temperatursensor
- 4: Ausgangssensor/zweiter Temperatursensor
- 5: Elektronik/Signalgeber
- 6: Steuerungsanordnung
- 7: Zulauf für Frischwasser
- 8: Fluidfluss
- 9: Heizleistung
- 11: Messkurve des zweiten Temperatursensors
- 12: Richtwert
- 13: Grenzwert
- 14: Messkurve des ersten Temperatursensors
- 15: Messkurve des zweiten Temperatursensors
- 16: konvergierter Wert
- 17: Fluidfluss
- 18: Heizleistung
- 19: Pulsspitzen Fluidfluss
- 20: Phase geringen Fluidflusses
- 21: Amplitude der eingebrachten Heizleistung
- 22: Phase von keiner eingebrachten Heizleistung
- 23: Pulsspitzen Fluidfluss
- 24: Grenzwert
- ΔT: Amplitude
- Δt: Zeitwert
- t: Zeit

## Patentansprüche

1. Verfahren zum Entkalken eines Heißgetränkegeräts, das einen elektrischen Durchlauferhitzer (1), einen Temperatursensor an einem Auslauf des Durchlauferhitzers (1) als Ausgangssensor (4), einen Signalgeber (5) und eine Steuerungs- oder Regelungsanordnung (6) umfasst, mit den folgenden Verfahrensschritten:
a) Starten eines Entkalkungsverfahrens,
b) Erzeugen eines zyklischen Durchflusses (8, 17) und zyklisches Einbringen einer Heizleistung (9, 18), wobei nach je einer Pulsspitze des Durchflusses die Heizleistung pulsartig eingebracht wird,
wobei während jedes Zyklus
c) mindestens ein Wert an dem Ausgangssensor (4) bestimmt wird,
d) der Wert oder ein aus mehreren Werten des Ausgangssensors (4) bestimmter Vergleichswert oder eine Regelgröße der Regelungsanordnung (6), die von der Regelungsanordnung (6) in Abhängigkeit eines am Ausgangssensor (4) erfassten Temperaturwertes geregelt wird, mit einem geräteseitig hinterlegten Grenzwert verglichen wird,
e) die Zyklen solange wiederholt werden, bis der Grenzwert (13, 25) zumindest erreicht wird und daraufhin ein erstes Signal ausgegeben wird, dass das Entkalkungsverfahren erfolgreich abgeschlossen ist.

2. Verfahren nach Anspruch 1, **dadurch gekennzeichnet, dass** der geräteseitig hinterlegte Grenzwert (25) einem absoluten Temperaturwert entspricht.

3. Verfahren nach Anspruch 1, **dadurch gekennzeichnet, dass** der geräteseitig hinterlegte Grenzwert einem Zeitwert entspricht.

4. Verfahren nach Anspruch 1, **dadurch gekennzeichnet, dass** der geräteseitig hinterlegte Grenzwert (13) einer Differenz zweier Temperaturwerte entspricht.

5. Verfahren nach Anspruch 4, **dadurch gekennzeichnet, dass** die Steuerungsanordnung (6) in einem Schritt i) nach dem Schritt c) einen zweiten Wert des Ausgangssensors (4) erfasst, daraus einen Differenzwert (ΔT) bildet und den Differenzwert (ΔT) mit dem Grenzwert (13) nach Anspruch 4 vergleicht.

6. Verfahren nach Anspruch 5, **dadurch gekennzeichnet, dass** die Steuerungsanordnung (6) in dem Schritt c) die Temperaturwerte des Ausgangssensors (4) kontinuierlich erfasst, ein Minimum und ein Maximum der Werte ermittelt, daraus einen Differenzwert (ΔT) bildet und den Differenzwert (ΔT) mit dem hinterlegten Grenzwert (13) nach Anspruch 4 vergleicht.

7. Verfahren nach Anspruch 1 zum Entkalken eines Heißgetränkegeräts mit einem weiteren als Eingangssensor bezeichneten Temperatursensor (3), der sich im Gegensatz zum Ausgangssensor (4) auf einer Oberfläche des Durchlauferhitzers befindet, **dadurch gekennzeichnet, dass** in einem Schritt ii) nach dem Schritt c) ein Wert des Eingangssensors (3) bestimmt wird.

8. Verfahren nach Anspruch 7, **dadurch gekennzeichnet, dass** die Steuerungsanordnung (6) in einem Schritt iii) nach dem Schritt c) einen Differenzwert zwischen dem Wert des Ausgangssensors (4) und dem Eingangssensor (3) bestimmt und den Differenzwert mit dem hinterlegten Grenzwert (16) nach Anspruch 4 vergleicht.

9. Verfahren nach einem der obigen Ansprüche, **dadurch gekennzeichnet, dass** das Entkalkungsverfahren vor Erreichen des Grenzwertes (13, 25) abgebrochen und ein Signal ausgegeben wird, dass das Entkalkungsverfahren nicht erfolgreich abgeschlossen ist.

10. Heißgetränkegerät, eingerichtet zur Durchführung des obigen Verfahrens nach Anspruch 1 bis 6 und Anspruch 9, mit einem elektrischen Durchlauferhitzer (1), einem Signalgeber (5), einer Steuerungs- oder Regelungsanordnung (6) und genau einem Temperatursensor.

## Claims

1. Method for descaling a hot beverage appliance, which comprises an electrical instantaneous water heater (1), a temperature sensor at an outlet of the instantaneous water heater (1) as output sensor (4), a signal emitter (5) and a control or regulation arrangement (6), with the following method steps:
a) starting the descaling method,
b) generating a cyclical flow (8, 17) and cyclical introduction of a heat output (9, 18), wherein the heat output is introduced in a pulse-like manner after each pulse peak of the flow,
wherein, during each cycle,
c) at least one value at the output sensor (4) is determined,
d) the value, or a comparison value determined from multiple values of the output sensor (4), or a regulated variable of the regulation arrangement (6), which is regulated by the regulation arrangement (6) as a function of a temperature value captured at the output sensor (4), is compared with a limit value stored on the device side,
e) the cycles are repeated until the limit value (13, 25) is at least reached, and in response a first signal is output, that the descaling method has finished successfully.

2. Method according to claim 1, **characterised in that** the limit value (25) stored on the device side corresponds to an absolute temperature value.

3. Method according to claim 1, **characterised in that** the limit value stored on the device side corresponds to a time value.

4. Method according to claim 1, **characterised in that** the limit value (13) stored on the device side corresponds to a difference between two temperature values.

5. Method according to claim 4**, characterised in that** the control arrangement (6), in a step i) after step c), captures a second value of the output sensor (4), forms a difference value (ΔT) therefrom and compares the difference value (ΔT) with the limit value (13) according to claim 4.

6. Method according to claim 5, **characterised in that** the control arrangement (6), in step c), continuously captures the temperature values of the output sensor (4), ascertains a minimum and a maximum of the values, forms a difference value (ΔT) therefrom and compares the difference value (ΔT) with the stored limit value (13) according to claim 4.

7. Method according to claim 1 for descaling a hot beverage appliance with a further temperature sensor (3), which is referred to as input sensor and is located on a surface of the instantaneous water heater, in contrast to the output sensor (4), **characterised in that**, in a step ii) after step c), a value of the input sensor (3) is determined.

8. Method according to claim 7, **characterised in that** the control arrangement (6), in a step iii) after step c), determines a difference value between the value of the output sensor (4) and the input sensor (3) and compares the difference value with the stored limit value (16) according to claim 4.

9. Method according to one of the above claims, **characterised in that** the descaling method is cancelled before the limit value (13, 25) is reached and a signal is output, that the descaling method has not finished successfully.

10. Hot beverage appliance, configured for performing the above method according to claim 1 to 6 and claim 9, with an electrical instantaneous water heater (1), a signal emitter (5), a control or regulation arrangement (6) and precisely one temperature sensor.

## Revendications

1. Processus de détartrage d'un appareil à boissons chaudes, lequel comprend un chauffe-eau électrique à écoulement libre (1), un détecteur de température sur une sortie du chauffe-eau à écoulement libre (1) en tant que détecteur de sortie (4), un émetteur de signal (5) et un dispositif de commande et de réglage (6), comprenant les étapes de processus suivantes :
a) démarrage d'un processus de détartrage,
b) production d'un écoulement cyclique (8, 17) et injection cyclique d'une puissance calorifique (9, 18), dans lequel, en fonction d'une crête d'impulsion de l'écoulement, la puissance calorifique est injectée par impulsion,
c) dans lequel pendant chaque cycle,
d) au moins une valeur est définie sur le détecteur de sortie (4),
e) la valeur ou une valeur de comparaison définie parmi plusieurs valeurs du détecteur de sortie (4), ou une variable de réglage du plan de réglage (6), réglée par le plan de réglage (6) en fonction d'une valeur de température détectée sur le détecteur de sortie (4), est comparée avec une valeur de seuil mémorisée côté appareil,
f) les cycles sont répétés jusqu'à ce que la valeur de seuil (13, 25) est au moins atteinte et ensuite, un premier signal est émis signifiant que le processus de détartrage s'est terminé convenablement.

2. Processus selon la revendication 1, **caractérisé en ce que** la valeur de seuil (25) mémorisée côté appareil correspond à une valeur de température absolue.

3. Processus selon la revendication 1, **caractérisé en ce que** la valeur de seuil (25) mémorisée côté appareil correspond à une valeur de temps.

4. Processus selon la revendication 1, **caractérisé en ce que** la valeur de seuil (13) mémorisée côté appareil correspond à une différence de deux valeurs de température.

5. Processus selon la revendication 4, **caractérisé en ce que** le dispositif de commande (6) détecte, dans une étape i) après l'étape c), une deuxième valeur du détecteur de sortie (4), il en produit une valeur différentielle (ΔT) et compare la valeur différentielle (ΔT) avec la valeur de seuil (13) selon la revendication 4.

6. Processus selon la revendication 5, **caractérisé en ce que** le dispositif de commande (6) détecte en continu à l'étape c), les valeurs de température du détecteur de sortie (4), détermine un minimum et un maximum des valeurs, en produit une valeur différentielle (ΔT) et compare selon la revendication 4 la valeur différentielle (ΔT) avec la valeur de seuil (13) mémorisée.

7. Processus selon la revendication 1 de détartrage d'un appareil à boissons chaudes comprenant un détecteur de température (3) supplémentaire désigné détecteur d'entrée, lequel se trouve, contrairement au détecteur de sortie (4), sur une surface du chauffe-eau à écoulement libre, **caractérisé en ce qu'**à l'étape ii) après l'étape c) une valeur du détecteur d'entrée (3) est définie.

8. Processus selon la revendication 7, **caractérisé en ce que** le dispositif de commande (6) définit, dans une étape iii) après l'étape (c), une valeur différentielle entre la valeur du détecteur de sortie (4) et le détecteur d'entrée (3) et compare selon la revendication 4 la valeur différentielle avec la valeur de seuil (16) mémorisée.

9. Processus selon l'une des revendications ci-dessus, **caractérisé en ce que** le processus de détartrage est interrompu avant d'avoir atteint la valeur de seuil (13, 25) et un signal est émis signifiant que le processus de détartrage ne s'est pas terminé convenablement.

10. Appareil à boissons chaudes, configuré pour exécuter le processus ci-dessus selon les revendications 1 à 6 et la revendication 9, comprenant un chauffe-eau électrique à écoulement libre (1), un émetteur de signal (5), un dispositif de commande et de réglage (6) et précisément un détecteur de température.
